# EUROPEAN PATENT APPLICATION

(11) **EP 2 957 491 A1**
(43) Date of publication of application: **23.12.2015**
(21) Application number: 14193560.1
(22) Date of filing: 17.11.2014
(51) Int. Cl.: B62K 3/00, B62K 9/02, B62K 13/04, B62K 15/00

(54) **A limit device for a joint of a three-wheel scooter**

(30) Priority: 21.06.2014 CN 201420335118 U
(71) Applicant: ZheJiang JinBang Sports Equipment Co., Ltd., Zhejiang 321404 (CN)
(72) Inventor: Xu, YongQiang, 321404 Zhejiang (CN)
(74) Representative: Lang, Christian

(57) **Abstract**

The application is directed to a limit device for a joint of a three-wheel stroller. The limit device comprises a decorative and protective cover (5), a front fork joint (1), a main pipe joint (2) and a folder adapter (4). A limit groove (6) is set at both sides of the front fork joint respectively. A long groove (7) is set at the middle of the main pipe joint. A compression spring (3) is set on the main pipe joint. The folder adapter is set on outer side of the compression spring. The front fork joint connects the main pipe joint through a screw shaft (9). A folder adapter hole (10) is set on both sides of the folder adapter respectively. The front fork joint connects the folder adapter through a linkage (8). The decorative and protective cover is set on the outer side of the front fork joint and the folder adapter. The application can achieve the purpose of rotating the front fork component and frame component around the joint.

## Description

### CROSS-REFERENCE TO RELATED APPLICATIONS

The present application claims priority based on Chinese Application No. 201420335118.5 filed June 21, 2014, the disclosure of which is hereby incorporated by reference in its entirety.

### TECHNICAL FIELD

The present application relates to a LIMIT DEVICE for a joint of a three-wheel stroller.

### BACKGROUND

The function of existing baby walker is single. After children can walk themselves without help, the baby walker has no use for them. Thus it causes waste of resources. At the same time, parents need to buy a scooter as their children need it. So if there has a stroller which can both have the functions of a baby walker and a scooter, it will be significant save cost and reduce storage space, and avoid unnecessary waste of resources.

### SUMMARY

The present application is directed to a limit device for a joint of a three-wheel stroller, which can achieve the functions of a baby walker and a scooter.

An embodiment of the present application provides a limit device for a joint of a three-wheel stroller. The limit device comprises a decorative and protective cover, a front fork joint, a main pipe joint and a folder adapter. A limit groove is set at both sides of the front fork joint respectively. A long groove is set at the middle of the main pipe joint. A compression spring is set on the main pipe joint. The folder adapter is set on outer side of the compression spring. The front fork joint connects the main pipe joint through a screw shaft. A folder adapter hole is set on both sides of the folder adapter respectively. The front fork joint connects the folder adapter through a linkage. The decorative and protective cover is set on the outer side of the front fork joint and the folder adapter.

Preferably, the linkage between the front fork joint and the folder adapter is a rod may be unloaded quickly.

Preferably, the front fork joint and the holes of the folder adapter are coaxial.

It is to be understood that both the foregoing general description and the following detailed description are exemplary only and are not necessarily restrictive of the disclosure as claimed. The accompanying drawings, which are incorporated in and constitute a part of the specification, illustrate an embodiment of the disclosure and together with the general description, serve to explain the principle of the disclosure.

### BRIEF DESCRIPTION OF THE DRAWINGS

The numerous advantages of the present application may be better understood by those skilled in the art by reference to the accompanying figures in which:
Fig.1 is structural representation of a limit device for a joint of three-wheel stroller according to the present application; and
Fig.2 is sectional view of a limit device for a joint of three-wheel stroller according to the present application; and
Fig.3 is motion diagram 1 of a limit device for a joint of three-wheel stroller according to the present application; and
Fig.4 is motion diagram 2 of a limit device for a joint of three-wheel stroller according to the present application; and
Fig.5 is relative rotation figure 1 about the front fork joint and the main pipe joint of a limit device for a joint of three-wheel stroller according to the present application; and
Fig.6 is relative rotation figure 2 about the front fork joint and the main pipe joint of a limit device for a joint of three-wheel stroller according to the present application; and
Fig.7 is dual effect renderings 1 of a limit device for a joint of three-wheel stroller according to the present application; and
Fig.8 is rotation figure 1 of rotating mechanism of a limit device for a joint of three-wheel stroller according to the present application; and
Fig.9 is rotation figure 1 of rotating mechanism of a limit device for a joint of three-wheel stroller according to the present application; and
Fig.10 is dual effect renderings 2 of a limit device for a joint of three-wheel stroller according to the present application.

### DETAILED DESCRIPTION

Reference will now be made in detail to the subject matter disclosed, which is illustrated in the accompanying drawings.

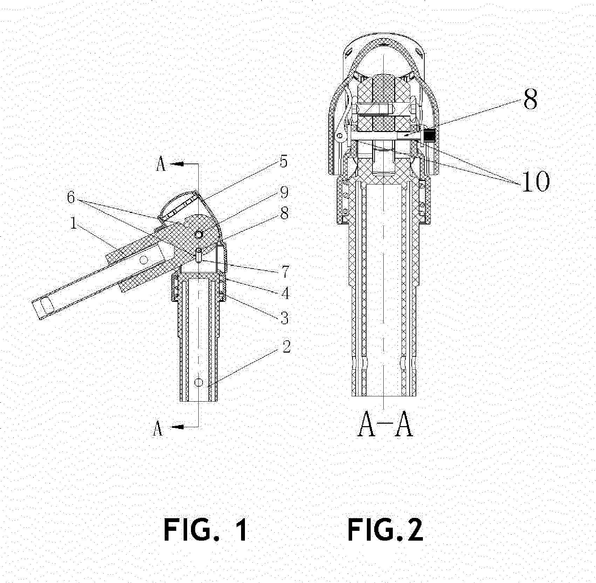

Referring to Fig. 1 to Fig.10, an example of the present application provides a limit device for a joint of a three-wheel stroller. The device comprises a decorative and protective cover 5, a front fork joint 1, a main pipe joint 2 and a folder adapter 4. On the both sides of the front fork joint 1, set a limit groove 6 respectively. At the middle of the main pipe joint 2, set a long groove 7.On the main pipe joint 2, set a compression spring 3.On the outer side of the compression spring 3, set the folder adapter 4.The front fork joint 1 connects the main pipe joint 2 through a screw shaft 9.On the both sides of the folder adapter 4, set a folder adapter holes 10 respectively. The front fork joint 1 connects the folder adapter 4 through a linkage. The decorative and protective cover 5 are set on the outer side of the front fork joint 1 and the folder adapter 4. The linkage between the front fork joint 1 and the folder adapter 4 is a rod 8 may be unloaded quickly. The front fork joint 1 and the holes of the folder adapter 4 are coaxial.

Referring to Fig.1, drawing off the decorative and protective cover 5, loosening the rod 8 and pulling down the folder adapter 4, to make the rod 8 out of the limit groove 6, then the front fork joint 1 can be rotated.

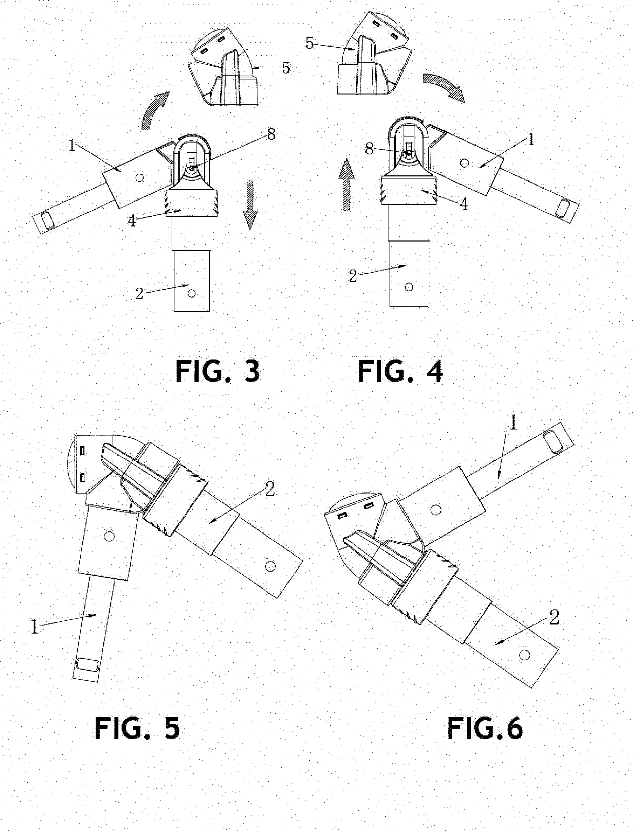

Referring to Fig.4, when the rotating, the folder adapter 4 along with the rod 8 has been topped on the arc between the two limit holes of the front fork joint 1, and at the same time, the compression spring 3 is in a compressed state. As the front fork shaft goes to the other side of the front fork joint 1, the limit groove 6 coincide with the long groove 7, the folder adapter 4 is upward for potential role of the compression spring 3, to make the rod 8 snap into the limit groove 6.After the rod 8 is locked, reverse the decorative and protective cover 5. Through these actions process, the front fork joint 1 and the main pipe joint 2 can relatively rotate and switch two fixed angles.

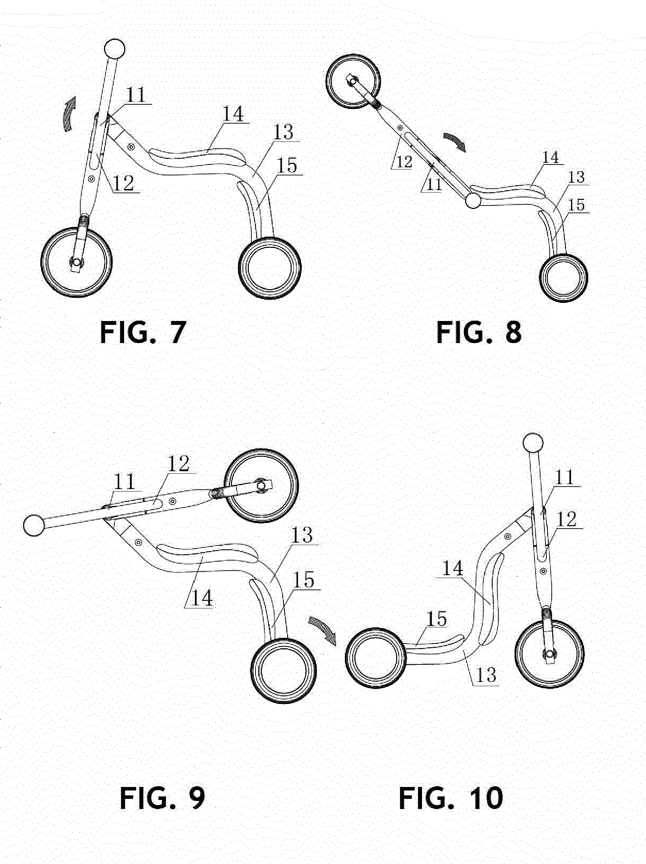

Referring to Fig.5 to Fig.6, it can achieve the front fork component 12 and frame component 13 rotate around the joint through the limit device for a joint. Referring to Fig.7 to Fig.10, it achieves the relative conversion between the baby walking frame and scooter, thus through the simple operation to achieve the purpose of combination of the baby walking frame and scooter.

## Claims

1. A limit device for a joint of a three-wheel stroller, the limit device comprising:
a decorative and protective cover;
a front fork joint, a limit groove is located on both sides of the front fork joint respectively;
a main pipe joint , a long groove is located at middle of the main pipe joint, a compression spring is sheathed on the main pipe joint; and
a folder adapter, the folder adapter is located on the outer side of the compression spring , a folder adapter hole is set on both sides of the folder adapter respectively,
wherein the front fork joint connects the main pipe joint through a screw shaft , the front fork joint is connected with the folder adapter through a linkage, the decorative and protective cover are set on the outer side of the front fork joint and the folder adapter.

2. The limit device as set forth in claim 1, wherein the linkage between the front fork joint and the folder adapter is a rod may be unloaded quickly.

3. The limit device as set forth in claim 1, wherein the front fork joint and the holes of the folder adapter are coaxial.
